# EUROPÄISCHE PATENTSCHRIFT

(11) **EP 1 323 958 B1**
(45) Veröffentlichungstag und Bekanntmachung des Hinweises auf die Patenterteilung: **22.08.2007**
(21) Anmeldenummer: 02020016.8
(22) Anmeldetag: 06.09.2002
(51) Int. Cl.: F16J 15/32

(54) **Dichtring**
Seal
Joint d'étanchéité

(30) Priorität: 19.12.2001 DE 10162688
(43) Veröffentlichungstag der Anmeldung: 02.07.2003
(73) Patentinhaber: Carl Freudenberg KG, 69469 Weinheim (DE)
(72) Erfinder: Barillas, Gonzalo, 36304 Alsfeld-Altenburg (DE)

(56) Entgegenhaltungen:
- EP-A- 0 414 298
- DE-A- 3 039 534
- DE-A- 19 528 744
- DE-A- 19 914 151
- DE-U- 7 814 685
- US-A- 3 106 406
- US-A- 5 269 537

## Beschreibung

### Technisches Gebiet

Die Erfindung betrifft einen Dichtring, umfassend einen Ringkörper aus elastomerem Werkstoff mit einem Klemmwulst, der formschlüssig in eine Ausnehmung des Einbauraums des Dichtrings einschnappbar ist, wobei der Klemmwulst durch einen ringförmig ausgebildeten Federkörper gebildet ist.

### Stand der Technik

Ein solcher Dichtring ist aus der DE 198 28 744 A1 bekannt. Der ringförmig ausgebildete Federkörper besteht aus einer Ringwendelfeder, die ebenso, wie der gesamte Dichtring, an einer Stelle ihres Umfangs unterbrochen ist. Im Bereich dieser Unterbrechung ist die Klemmkraft, bezogen auf die in Umfangsrichtung beiderseits angrenzenden Bereiche geringer; eine vorteilhafte gleichmäßige Klemmkraft entlang des gesamten Umfangs des Dichtrings ist dadurch nicht zu erzielen.

Ein weiterer Dichtring ist aus der DE 30 39 534 A1 bekannt. Der Dichtring ist selbstarretierend ausgebildet und gelangt in einem Pneumatikzylinder zur Anwendung. Der Ringkörper besteht aus einem elastomeren Polyurethanwerkstoff, der eine Härte von 90 bis 95 Shore A aufweist, wobei der Klemmwulst einstückig ineinander übergehend und materialeinheitlich mit dem Ringkörper ausgebildet ist. Eine ausreichende Sicherheit gegen ein unbeabsichtigtes Lösen des Dichtrings aus seinem Einbauraum wird durch den vergleichsweise harten Werkstoff erzielt. Der Einbau des vorbekannten Dichtrings kann werkzeuglos erfolgen.

Aus der DE 199 14 151 A1 ist ein Dichtring bekannt, der besonders für schmale Dichtspalte zwischen einem Gehäuse und einer Welle geeignet ist. Der Ringkörper besteht aus einem elastomeren Werkstoff und weist im Bereich einer seiner Stirnseiten einen Federstahlring auf, der an einer Stelle seines Umfangs unterbrochen ist. Durch die umfangsseitige Unterbrechung des Federstahlrings wird ein geringfügiges Zusammendrücken des Dichtrings erlaubt und dadurch die Montage in den Einbauraum.

### Darstellung der Erfindung

Der Erfindung liegt die Aufgabe zugrunde, einen Dichtring der eingangs genannten Art derart weiterzuentwickeln, dass der elastomere Werkstoff des Ringkörpers ausschließlich im Hinblick auf ein möglichst gutes Abdichtungs /Abstreifergebnis ausgewählt werden kann und dass der Klemmwulst trotzdem eine haltbare und definierte Klemmung des Dichtrings im Einbauraum entlang des gesamten Umfangs gewährleistet und dadurch die Nachteile von an einer Stelle unterbrochenen Stützringen vermieden werden.

Diese Aufgabe wird erfindungsgemäß durch die Merkmale von Anspruch 1 gelöst. Auf vorteilhafte Ausgestaltungen nehmen die Unteransprüche Bezug.

Im Rahmen der vorliegenden Erfindung ist es vorgesehen, dass der Federkörper mit gleichmäßig in Umfangsrichtung verteilt angeordneten Ausnehmungen versehen ist, wobei die dadurch gebildeten, einander in Umfangsrichtung benachbart zugeordneten Blöcke nur durch innenumgangsseitige Stege miteinander verbunden sind. Hierbei ist von Vorteil, dass der elastomere Werkstoff für den Ringkörper ausschließlich im Hinblick auf eine möglichst gute Abdichtung und/oder Abstreifwirkung ausgewählt werden kann. Da der Klemmwulst, bezogen auf den Ringkörper, ein Bauteil aus einem abweichenden, für eine gute Klemmung erforderlichen Werkstoff ist, hat die Funktion des Klemmwulstes für die Auswahl des elastomeren Werkstoffs für den Ringkörper keine Bedeutung. Außerdem ist von Vorteil, dass der Federkörper ringförmig ausgebildet, d.h. in sich geschlossen ist. Die Klemmwirkung des Klemmwulstes in der Ausnehmung des Einbauraums ist daher über den gesamten Umfang des Ringkörpers konstant.

Bevorzugt ist die Ausnehmung im Einbauraum zum Klemmwulst kongruent gestaltet und der Klemmwulst ist unter elastischer radialer Vorspannung in die Ausnehmung einschnappbar. Der Klemmwulst kann den Ringkörper außenumfangsseitig umschließen, wobei für den Fall, dass als Federkörper eine Schraubendruckfeder zur Anwendung gelangt, bevorzugt der halbe Windungsdurchmesser im Ringkörper eingelassen ist und die andere Hälfte des Windungsdurchmessers die Oberfläche des Ringkörpers überragt. Mit dem Teil des Windungsdurchmessers, der die Oberfläche des Ringkörpers überragt, ist der Dichtring in die Ausnehmung des Einbauraums eingeschnappt.

### Zur Montage des Dichtrings wird folgendes ausgeführt:

Zur Erzielung einer guten Abdichtwirkung/Abstreifwirkung wird für die meisten Anwendungsfälle ein elastomerer Werkstoff benötigt, der vergleichsweise weich ist und eine Härte Shore A von 70 bis 85 aufweist. Demgegenüber muss der Klemmwulst bei Beaufschlagung des Dichtrings innerhalb seines Einbauraums mit axialen Kräften unnachgiebig sein, um den Dichtring sicher innerhalb des Einbauraums zu halten. Die Montage des Dichtrings erfolgt derart, dass der Dichtring insgesamt, also der Ringkörper und der Klemmwulst, in radialer Richtung elastisch verformt und anschließend in den Einbauraum eingesetzt wird. Im Bereich der Ausnehmung des Einbauraums schnappt der Klemmwulst radial in seine herstellungsbedingte Form zurück und bildet dadurch eine formschlüssige Verbindung mit der Ausnehmung des Einbauraums. Die Klemmverbindung ist besonders haltbar, da der Federkörper durch Belastung in axialer Richtung, d.h. in und gegen die Einbaurichtung, nicht elastisch verformbar ist.

Durch die erfindungsgemäße Ausgestaltung des Dichtrings ist einerseits eine ausgezeichnete Fixierung des Dichtrings innerhalb seines Einbauraums gewährleistet und andererseits weist der Dichtring durch eine optimal auf den Anwendungsfall abgestimmte Auswahl des elastomeren Werkstoffs für den Ringkörper ausgezeichnete Abdicht- /Abstreif-Eigenschaften auf.

Der Ringkörper und der Federkörper können durch Vulkanisation verbunden sein. Dadurch wird eine adhäsiv verbundene, vormontierbare Einheit, bestehend aus Ringkörper und Federkörper gebildet, wobei der Ringkörper und der Federkörper unlösbar und dadurch unverliebar aneinander festgelegt sind. Die Montage eines derartigen Dichtrings ist dadurch vereinfacht.

Der Federkörper kann durch eine ringförmige, in sich geschlossene Schraubendruckfeder gebildet sein. Hierbei ist von Vorteil, dass derartige Bauteile in vielen verschiedenen Größen einfach und kostengünstig herstellbar sind.

Der innere Hohlraum der Schrauben-Druckfeder, den die Windungen der Schrauben-Druckfeder begrenzen, kann vom elastomeren Werkstoff des Ringkörpers vollständig ausgefüllt sein. Die Herstellung des Dichtrings ist durch eine solche Ausgestaltung wesentlich vereinfacht, da es keiner Abdichtung des inneren Hohlraums bei der Vulkanisation des Dichtrings bedarf. Durch die vereinfachte Herstellung ist der Dichtring insgesamt kostengünstig herstellbar.

Der Federkörper kann durch einen zumindest partiell biegeweichen Ring gebildet sein.

Der Federkörper besteht bevorzugt aus einem rostfreien Federstahl, sodass der Dichtring zur Abdichtung beliebiger Medien zur Anwendung gelangen kann, sofern der Elastomerwerkstoff, aus dem der Ringkörper besteht, entsprechend ausgewählt ist. Außerdem weist ein Federkörper aus Federstahl auch während einer langen Gebrauchsdauer keine nennenswerte Relaxation auf, sodass der Dichtring während der gesamten Gebrauchsdauer stets sicher in der Ausnehmung des Einbauraums gehalten ist.

Nach einer anderen Ausgestaltung besteht die Möglichkeit, dass der Federkörper aus einem thermoplastischen Kunststoff besteht.

Der Ringkörper weist eine Härte Shore A von weniger als 90 auf. Die Härte Shore A beträgt bevorzugt 70 bis 85. Ein Ringkörper mit einer Härte Shore A von 70 bis 85 hat sich für die meisten Dichtungs- und/oder Abstreif-Anwendungen bestens bewährt, besser als ein Werkstoff, dessen Härte 94 bis 98 Shore A, wie beispielsweise im Stand der Technik, beträgt. Werkstoffe mit einer Härte von mehr als 90 Shore A liegen außerdem nicht immer verarbeitbar vor.

Ein Federkörper aus einem vergleichsweise harten Kunststoff ist ebenfalls denkbar, wobei die Ausgestaltung eines solchen Federkörpers unterschiedlich sein kann.

Der zuvorbeschriebene Dichtring kann als Stangendichtung verwendet werden.

### Ausführung der Erfindung

Zwei Ausführungsbeispiele des erfindungsgemäßen Dichtrings werden nachfolgend anhand der beigefügten Fig. 1 bis 4 näher erläutert. Die Fig. 1 bis 4 zeigen jeweils in schematischer Darstellung:
- Fig. 1: ein erstes Ausführungsbeispiel des erfindungsgemäßen Dichtrings als Einzelteil in längsgeschnittener Darstellung,
- Fig. 2: den Dichtring aus Fig. 1 im eingebauten Zustand.
- Fig. 3: ein zweites Ausführungsbeispiel eines biegeweichen Rings, der den Federkörper bildet und
- Fig. 4: den Federkörper aus Fig. 3, der einen Bestandteil eines Dichtrings bildet.

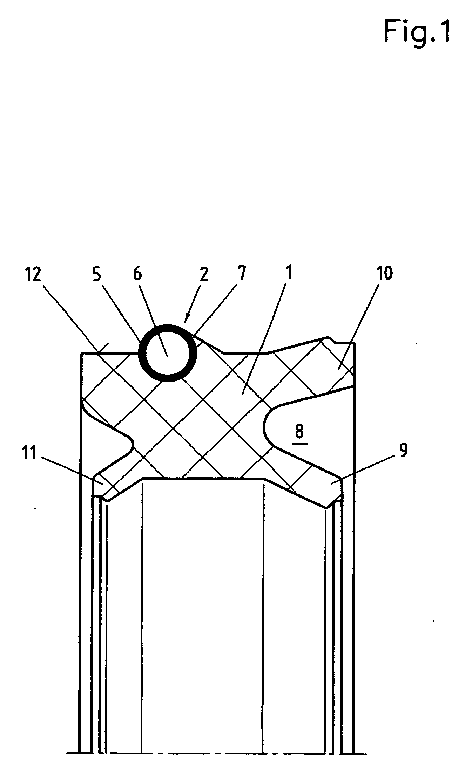

In Fig. 1 ist ein Ausführungsbeispiel eines erfindungsgemäßen Dichtrings als Einzelteil gezeigt. Der Dichtring umfasst einen Ringkörper 1 aus einem elastomeren Werkstoff, der in diesem Ausführungsbeispiel eine Härte Shore A von 70 bis 85 aufweist. Der Klemmwulst 2 ist durch eine ringförmig ausgebildete Schrauben-Druckfeder 5 gebildet, die aus einem Federstahl besteht und vom elastomeren Werkstoff des Ringkörpers 1 vollständig ummantelt ist. Die Verbindung des Ringkörpers 1 mit der Schrauben-Druckfeder 5 erfolgt durch Vulkanisation der Bauteile, wobei im Hinblick auf eine vereinfachte Herstellung der innere Hohlraum 6 der Schrauben-Druckfeder 5, den die Windungen 7 der Schrauben-Druckfeder 5 begrenzen, vom elastomeren Werkstoff des Ringkörpers 1 vollständig ausgefüllt ist.

Der Dichtring ist als Stangendichtung ausgebildet und weist auf der dem abzudichtenden Raum 8 zugewandten Seite radial innenseitig eine dynamisch beanspruchte Dichtlippe 9 und radial außenseitig eine statisch beanspruchte Dichtlippe 10 auf. Auf der dem abzudichtenden Raum abgewandten Seite ist der dynamisch beanspruchten Dichtlippe 9 mit axialem Abstand eine Abstreiflippe 11 benachbart zugeordnet, die Verunreinigungen von der in Richtung des abzudichtenden Raums 8 einfahrenden Stange 13 abstreift und dadurch die dynamisch beanspruchte Dichtlippe 9 und den abzudichtenden Raum 8 vor Verunreinigungen schützt.

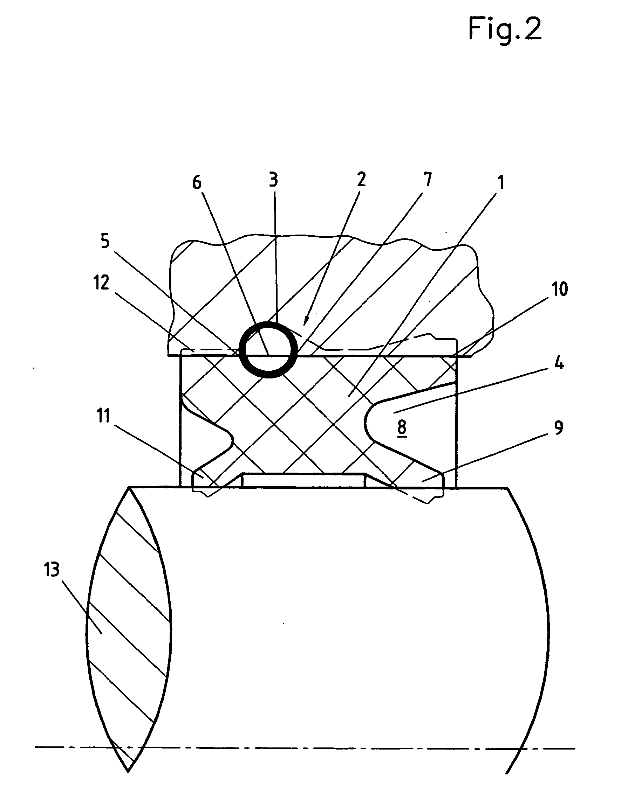

In Fig. 2 ist der Dichtring aus Fig. 1 im eingebauten Zustand gezeigt. Der Dichtring ist innerhalb des Einbauraums 4 angeordnet, wobei die Schrauben-Druckfeder 5 in eine im Wesentlichen kongruent gestaltete Ausnehmung 3 des Einbauraums 4 eingeschnappt ist. Dadurch ist eine sichere axiale Festlegung des Dichtrings innerhalb des Einbauraums 4 sichergestellt. Im hier gezeigten Ausführungsbeispiel ist die Schrauben-Druckfeder 5 unter radialer Vorspannung in der Ausnehmung 3 angeordnet, wobei die Schrauben-Druckfeder 5 den Ringkörper 1 außenumfangsseitig in sich geschlossen umschließt, mit etwa dem halben Windungsdurchmesser im Ringkörper 1 angeordnet ist und mit etwa dem halben Windungsdurchmesser die Oberfläche 12 des Ringkörpers 1 außenumfangsseitig überragt. Der als Stangendichtung ausgebildete Dichtring dichtet die in axialer Richtung hin- und hergehende Stange 13 ab.

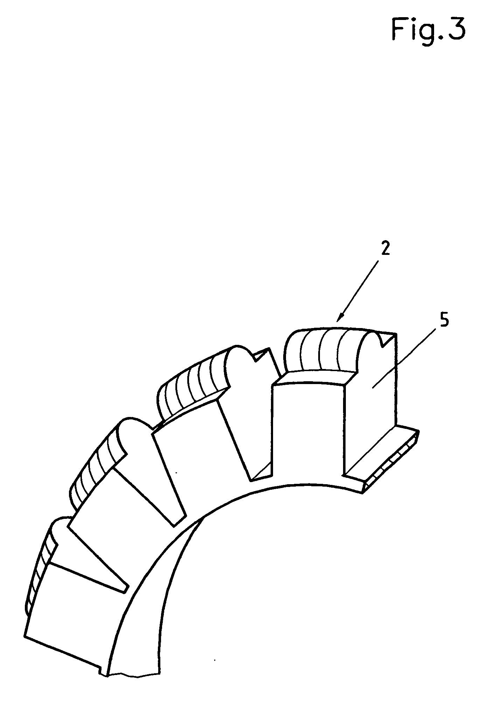

In Fig. 3 ist ein Federkörper 5 gezeigt, der als biegeweicher Ring ausgebildet ist. Der Ring 5 ist mit gleichmäßigen in Umfangsrichtung verteilt angeordneten Ausnehmungen versehen, wobei die dadurch gebildeten, einander in Umfangsrichtung benachbart zugeordneten Blöcke nur durch innenumfangsseitige Stege miteinander verbunden sind.

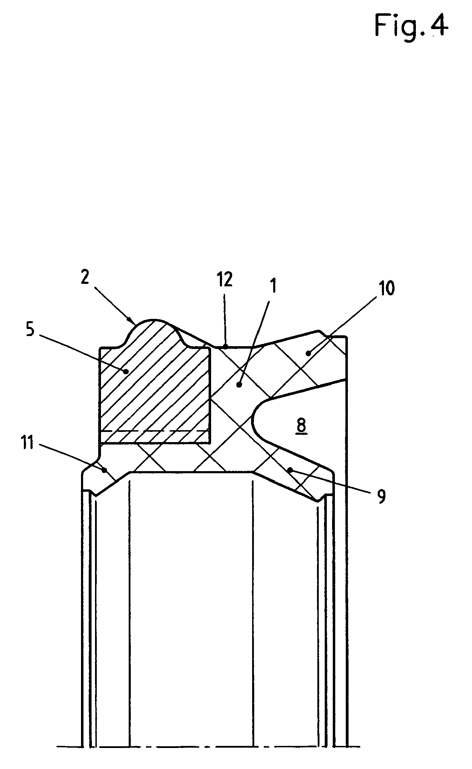

In Fig. 4 ist der Federkörper aus Fig. 3 in einem Dichtring dargestellt und adhäsiv mit dem elastomeren Werkstoff verbunden, der die Dichtlippen 9, 10 und die Abstreiflippe 11 bildet.

## Patentansprüche

1. Dichtring, umfassend einen Ringkörper (1) aus elastomerem Werkstoff mit einem Klemmwulst (2), der formschlüssig in eine Ausnehmung des Einbauraums des Dichtrings einschnappbar ist, wobei der Klemmwulst (2) durch einen ringförmig ausgebildeten Federkörper (5) gebildet ist, **dadurch gekennzeichnet, dass** der Federkörper (5) mit gleichmäßig in Umfangsrichtung verteilt angeordneten Ausnehmungen versehen ist, wobei die **dadurch** gebildeten, einander in Umfangsrichtung benachbart zugeordneten Blöcke nur durch innenumfangsseitige Stege miteinander verbunden sind.

2. Dichtring nach Anspruch 1, **dadurch gekennzeichnet, dass** der Ringkörper (1) und der Federkörper (5) durch Vulkanisation verbunden sind.

3. Dichtring nach einem der Ansprüche 1 oder 2, **dadurch gekennzeichnet, dass** der Federkörper (5) vom elastomeren Werkstoff des Ringkörpers (1) vollständig ummantelt ist.

4. Dichtring nach einem der Ansprüche 1 bis 3, **dadurch gekennzeichnet, dass** der Federkörper (5) durch einen zumindest partiell biegeweichen Ring gebildet ist.

5. Dichtring nach einem der Ansprüche 1 bis 4, **dadurch gekennzeichnet, dass** der Federkörper (5) aus einem thermoplastischen Kunststoff besteht.

6. Dichtring nach einem der Ansprüche 1 bis 5, **dadurch gekennzeichnet, dass** der Ringkörper (1) eine Härte Shore A von weniger als 90 aufweist.

7. Dichtring nach Anspruch 6, **dadurch gekennzeichnet, dass** die Härte 60 bis 85 Shore A beträgt.

8. Verwendung eines Dichtrings gemäß einem der Ansprüche 1 bis 7 als Stangendichtung.

## Claims

1. Sealing ring, comprising an annular body (1) made from elastomeric material, having a clamping bead (2) which can be snapped into a recess of the installation space of the sealing ring in a form-fitting manner, with the clamping bead (2) being formed by an annularly-shaped spring body (5), **characterized in that** the spring body (5) is provided with recesses which are arranged so as to be distributed uniformly in the peripheral direction, with the blocks thereby formed, which are assigned adjacently to one another in the peripheral direction, being connected to one another only by means of webs at the inner peripheral side.

2. Sealing ring according to Claim 1, **characterized in that** the annular body (1) and the spring body (5) are connected by means of vulcanization.

3. Sealing ring according to one of Claims 1 or 2, **characterized in that** the spring body (5) is completely encased by the elastomeric material of the annular body (1).

4. Sealing ring according to one of Claims 1 to 3, **characterized in that** the spring body (5) is formed by an at least partially flexible ring.

5. Sealing ring according to one of Claims 1 to 4, **characterized in that** the spring body (5) is composed of a thermoplastic material.

6. Sealing ring according to one of Claims 1 to 5, **characterized in that** the annular body (1) has a Shore A hardness of less than 90.

7. Sealing ring according to Claim 6, **characterized in that** the hardness is 60 to 85 Shore A.

8. Use of a sealing ring according to one of Claims 1 to 7 as a rod seal.

## Revendications

1. Joint d'étanchéité, comprenant un corps annulaire (1) en une matière élastomère avec un bourrelet de serrage (2), qui peut se coincer en complémentarité de forme dans un évidement de l'espace de montage du joint d'étanchéité, dans lequel le bourrelet de serrage (2) est formé par un élément de ressort (5) de forme annulaire, **caractérisé en ce que** l'élément de ressort (5) est pourvu d'évidements répartis uniformément dans la direction périphérique, dans lequel les blocs ainsi formés associés au voisinage l'un de l'autre dans la direction périphérique ne sont reliés l'un à l'autre que par des nervures du côté de la périphérie intérieure.

2. Joint d'étanchéité selon la revendication 1, **caractérisé en ce que** le corps annulaire (1) et l'élément de ressort (5) sont joints par vulcanisation.

3. Joint d'étanchéité selon l'une des revendications 1 ou 2, **caractérisé en ce que** l'élément de ressort (5) est entièrement enrobé par la matière élastomère du corps annulaire (1).

4. Joint d'étanchéité selon l'une quelconque des revendications 1 à 3, **caractérisé en ce que** l'élément de ressort (5) est formé par un anneau au moins partiellement flexible.

5. Joint d'étanchéité selon l'une quelconque des revendications 1 à 4, **caractérisé en ce que** l'élément de ressort (5) se compose d'une matière plastique thermoplastique.

6. Joint d'étanchéité selon l'une quelconque des revendications 1 à 5, **caractérisé en ce que** le corps annulaire (1) présente une dureté Shore A inférieure à 90.

7. Joint d'étanchéité selon la revendication 6, **caractérisé en ce que** la dureté vaut de 60 à 85 Shore A.

8. Utilisation d'un joint d'étanchéité selon l'une quelconque des revendications 1 à 7 comme joint d'étanchéité de barre.
